# EUROPÄISCHE PATENTSCHRIFT

(11) **EP 3 341 781 B1**
(45) Veröffentlichungstag und Bekanntmachung des Hinweises auf die Patenterteilung: **22.04.2020**
(21) Anmeldenummer: 16760014.7
(22) Anmeldetag: 24.08.2016
(51) Int. Cl.: G02B 21/00, G01N 21/64, G02B 21/16, G02B 21/06

(54) **BELEUCHTUNGSANORDNUNG FÜR EIN LICHTBLATT-MIKROSKOP**
ILLUMINATION ARRANGEMENT FOR A LIGHT SHEET MICROSCOPE
ENSEMBLE D'ÉCLAIRAGE POUR UN MICROSCOPE À FEUILLE DE LUMIÈRE

(30) Priorität: 24.08.2015 DE 102015114037; 27.08.2015 LU 92807
(43) Veröffentlichungstag der Anmeldung: 04.07.2018
(73) Patentinhaber: Leica Microsystems CMS GmbH, 35578 Wetzlar (DE)
(72) Erfinder: FAHRBACH, Florian, 68167 Mannheim (DE); KNEBEL, Werner, 76709 Kronau (DE); BRADL, Joachim, 68519 Viernheim (DE)
(74) Vertreter: Schaumburg und Partner Patentanwälte mbB
(86) Internationale Anmeldenummer: PCT/EP2016/069988
(87) Internationale Veröffentlichungsnummer: WO 2017/032805

(56) Entgegenhaltungen:
- DE-A1-102010 013 223
- DE-A1-102013 213 781
- JÖRG G RITTER ET AL: "A cylindrical zoom lens unit for adjustable optical sectioning in light sheet microscopy References and links", BIOMEDICAL OPTICS EXPRESS 185, Bd. 170, Nr. 347, 1. Januar 2012 (2012-01-01), Seiten 211-219, XP055137860,
- HUISKEN J ET AL: "EVEN FLUORESCENCE EXCITATION BY MULTIDIRECTIONAL SELECTIVE PLANE ILLUMINATION MICROSCOPY (MSPIM)", OPTICS LETTERS, OPTICAL SOCIETY OF AMERICA, US, Bd. 32, Nr. 17, 1. September 2007 (2007-09-01), Seiten 2608-2610, XP001507615, ISSN: 0146-9592, DOI: 10.1364/OL.32.002608

## Beschreibung

Die Erfindung betrifft ein Lichtblatt-Mikroskop mit einer Beleuchtungseinrichtung zum Beleuchten einer Probe mit einem Beleuchtungslichtbündel, das im Bereich der Probe als Lichtblatt ausgebildet ist, wobei die Beleuchtungseinrichtung ein Beleuchtungsobjektiv, eine Tubuslinse und eine astigmatische Optik aufweist.

Die Erfindung betrifft außerdem ein Verfahren zum Beleuchten einer Probe unter Verwendung einer solchen Beleuchtungseinrichtung.

Die SPIM-Technik (Single Plane Illumination Microscopy), bei der eine schichtweise Beleuchtung der Probe erfolgt, erlaubt eine schnellere und probenschonendere Erfassung von Bilddaten, als beispielsweise bei einer punktweisen Abtastung einer Probe. Ein bekanntes Einsatzgebiet der SPIM-Technologie ist der Bereich der Fluoreszenz-Mikroskopie, wobei Fluorophore in der Probe mit Laserlicht angeregt werden. Bei der SPIM-Technologie findet hierbei eine Anregung nur in einer von einem Beleuchtungslichtblatt (auch "Lichtstreifen" genannt) beleuchteten Objektregion statt. Eine Schädigung der Probe durch Beleuchtungslicht in anderen Ebenen ist hierdurch vermieden. Üblicherweise werden in einer Richtung senkrecht dazu ein oder mehrere zweidimensionale Bilder aufgenommen.

Eine nach dem SPIM-Verfahren arbeitende optische Vorrichtung ist in DE 102 57 423 A1 beschrieben. Bei diesem Mikroskop wird eine Probe mit einem dünnen Lichtblatt beleuchtet, während die Beobachtung aus einer zu der Ebene des beleuchtenden Lichtblattes senkrechten Richtung erfolgt. Hierbei erfolgen die Beleuchtung und die Detektion über zwei separate optische Strahlengänge mit jeweils separater Optik. Das Lichtblatt wird von einer Zylinderlinse erzeugt. Für die Bildaufnahme wird die Probe durch das bezüglich des Detektors feststehende Lichtblatt bewegt, um schichtweise Fluoreszenz- und/oder Streulicht mit einem flächigen Detektor aufzunehmen. Die so gewonnenen Schichtbilddaten lassen sich anschließend zu einem aus einer dreidimensionalen Abbildung der Probe entsprechenden Datensatz zusammensetzen.

Die Erzeugung eines Lichtblattes ausschließlich mit einer Zylinderlinse hat den Nachteil, dass die optische Qualität des Lichtblattes mit üblicherweise erhältlichen Linsen nicht ausreichend hoch ist, um über einen breiten räumlichen und spektralen Bereich ein beugungsbegrenztes Lichtblatt zu erzeugen. Selbst mit achromatischen Zylinderlinsen ist es nicht möglich, ein beugungsbegrenztes Lichtblatt mit einer Dicke von wenigen µm zu erzeugen.

Aus DE 10 2007 015 063 A1 ist eine optische Anordnung mit einer Lichtquelle zum Abstrahlen eines Lichtbündels und mit optischen Elementen zur Umwandlung dieses Lichtbündels in die Form eines Lichtblattes bekannt. Die optische Anordnung ist insbesondere geeignet zur Beleuchtung einzelner Ebenen einer dreidimensionalen Probe bei der Selective Plane Illumination Microscopy (SPIM). Es sind Mittel zur Variation des Querschnittes des Lichtblattes, zur Variation der Länge des Lichtblattes und/oder zur Beeinflussung der Richtung, der innerhalb des Lichtblattes verlaufenden Strahlungsanteile vorhanden, um die Geometrie des Lichtblattes an die Beleuchtungserfordernisse bei der Beobachtung ein und derselben Probenebene mit mehreren verschiedenartigen Objektiven zu ermöglichen.

Aus der Dissertation von W. Krieger, "Mapping Diffusion Properties in Living Cells", Heidelberg, 2014, ist eine andere Anordnung zur Erzeugung eines Lichtblattes bekannt. Bei dieser Anordnung ist eine Zylinderlinse genau im Abstand ihrer Brennweite vor der Pupille des Beleuchtungsobjektivs angeordnet. In nachteiliger Weise ist die Breite des Lichtblatts wegen der Abhängigkeit der Breite des Lichtblatts von der Brennweite der an der fest vorgegebenen Position montierten Zylinderlinse kein freier Parameter mehr. Wird die Brennweite der Zylinderlinse so gewählt, dass sie dem Abstand der Position der Zylinderlinse zur Pupille des Beleuchtungsobjektivs entspricht, so ist die Breite des Lichtblatts w_{LS} schon festgelegt durch w_{LS} = M·w_{CL}, wobei w_{CL} die Breite des kollimierten Beleuchtungslichtbündels an der Position der CL ist und M=f_{BO}/f_{CL} der Quotient der Brennweiten von Zylinderlinse und Beleuchtungsobjektiv ist. Da üblicherweise w_{CL}, f_{BO}/f_{CL} vorgegeben sind, hat man also keinen freien Parameter mehr zur Variation der Breite des Lichtblatts w_{LS}.

Das Dokument DE 10 2013 213781 A1 offenbart ein Lichtblatt-Mikroskop mit einer Beleuchtungseinrichtung, die ein Beleuchtungsobjektiv, eine Tubuslinse und eine Strahlablenkvorrichtung aufweist. Die Strahlablenkvorrichtung ist dem Beleuchtungsobjektiv und der Tubuslinse in Ausbreitungsrichtung des Beleuchtungslichtbündels vorgeordnet. Die Strahlablenkvorrichtung erzeugt ein sogenanntes Quasi-Lichtblatt, indem sie das von der Lichtquelle emittierte Beleuchtungslichtbündel schnell hin und her bewegt.

In dem Dokument DE 10 2010 013223 A1 ist ein Lichtblatt-Mikroskop offenbart, bei dem eine Fokussieroptik einen Linienfokus erzeugt, der mittels eines Scanners in horizontaler Richtung innerhalb eines Probenvolumens verlagert wird, um so ein Lichtblatt zu generieren.

Das Dokument Jörg G Ritter ET AL: "A cylindrical zoom lens unit for adjustable optical sectioning in light sheet microscopy References and links, BIOMEDICAL OPTICS EXPRESS 185", Bd. 170, Nr. 347, 1. Januar 2012, Seiten 211 - 219, XP055137860 offenbart ein Lichtblatt-Mikroskop, das zum Zwecke der Einstellung der Lichtblattgeometrie eine vergleichsweise komplex aufgebaute Zylinderoptik zeigt, die aus einem aus fünf Linsen gebildeten Zoomlinsensystem und einer weiteren nachgeordneten Zylinderlinse besteht, die das Lichtbündel in die hintere Brennebene eines Beleuchtungsobjektivs fokussiert.

Das Dokument HUISKEN J ET AL: "EVEN FLUORESCENCE EXCITATION BY MULTIDIRECTIONAL SELECTIVE PLANE ILLUMINATION MICROSCOPY (MSPIM)", OPTICS LETTERS, OPTICAL SOCIETY OF AMERICA, US, Bd. 32, Nr. 17, 1. September 2007, Seiten 2608 - 2610, XP001507615 beschreibt ein Lichtblatt-Mikroskop, bei dem zur Vermeidung von nachteiligen Abschattungseffekten die Probe von zwei gegenüberliegenden Seiten mit einem Lichtblatt beleuchtet wird. Dabei wird das Lichtblatt so erzeugt, dass es in der Lichtblattebene eine kollimierte Lichtverteilung bildet.

Es ist daher die Aufgabe der vorliegenden Erfindung, ein Lichtblatt-Mikroskop mit einer kompakt ausbildbaren Beleuchtungsanordnung anzugeben, die die flexible Erzeugung eines beugungsbegrenzten Lichtblattes ermöglicht.

Die Aufgabe wird durch ein Lichtblatt-Mikroskop nach Anspruch 1 gelöst. Die astigmatische Optik ist derart ausgebildet und derart zwischen der Tubuslinse und dem Beleuchtungsobjektiv angeordnet, dass das aus dem Beleuchtungsobjektiv austretende Beleuchtungslichtbündel sowohl in einer Sagittalebene, als auch in einer Meridionalebene fokussiert ist.

Es ist eine weitere Aufgabe der vorliegenden Erfindung ein flexibel an die jeweiligen Erfordernisse anpassbares Verfahren zum Beleuchten einer mikroskopischen Probe mit einem Lichtblatt anzugeben.

Die weitere Aufgabe wird durch ein Verfahren nach Anspruch 20 gelöst. Eine astigmatische Optik wird an einer beliebigen Stelle zwischen einer Tubuslinse und einem Beleuchtungsobjektiv derart angeordnet, dass das von dem Beleuchtungsobjektiv fokussierte Beleuchtungslichtbündel einen sagittalen und einen meridionalen Fokus aufweist, die von dem Beleuchtungsobjektiv einen unterschiedlichen Axialabstand aufweisen.

Die erfindungsgemäße Beleuchtungsanordnung hat, was weiter unten noch im Detail erläutert wird, den Vorteil eines äußerst kompakten Aufbaus, der es ermöglicht, bei der Realisierung eines Mikroskops Standard-Mikroskopstative verwenden zu können. Darüber hinaus besteht nach einem eigenständigen Erfindungsgedanken der ganz besondere Vorteil, dass Beleuchtungsobjektive so angefertigt werden können, dass sie in rechtwinkliger Anordnung auch zusammen mit Detektionsobjektiven hohe numerische Apertur verwendbar sind.

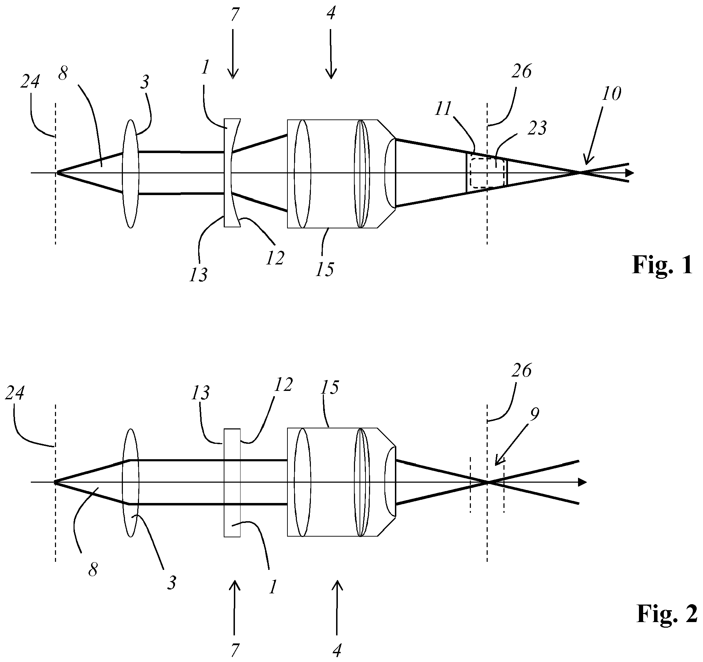

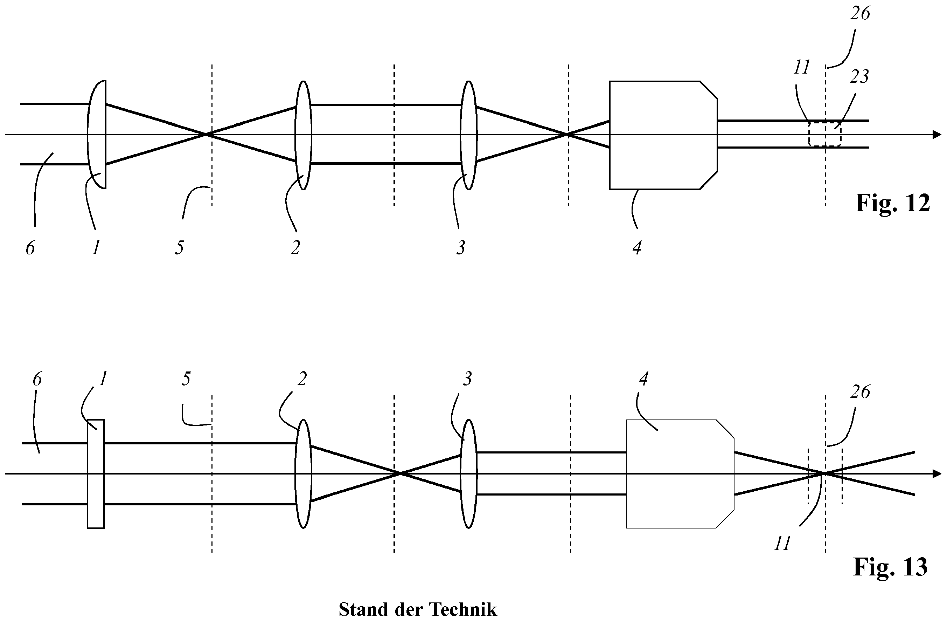

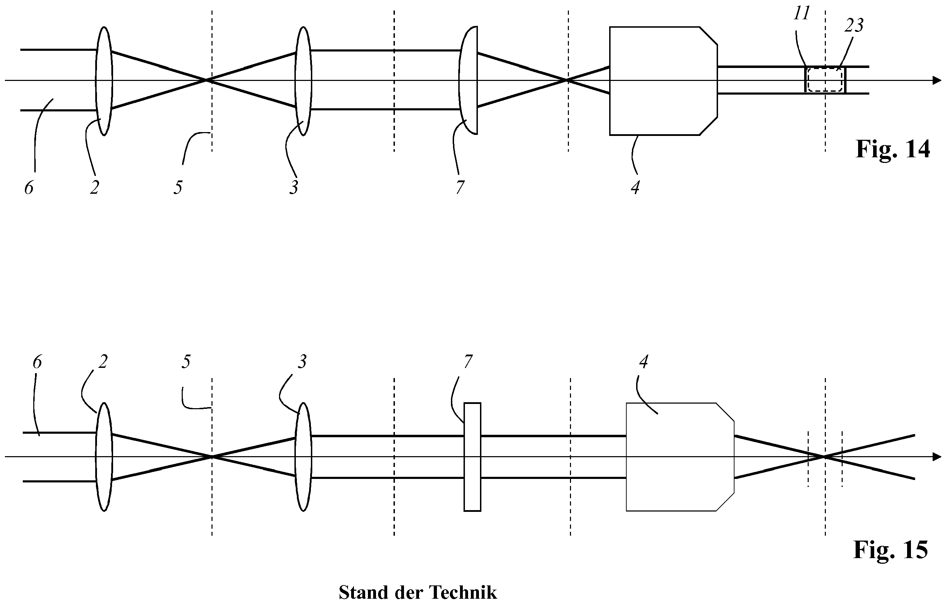

In erfindungsgemäßer Weise wurde insbesondere erkannt, dass die bisherigen Ansätze ein Lichtblatt zu erzeugen unter anderem deshalb wenig flexibel sind, weil stets ein Lichtblatt erzeugt wird, dass in einer Ebene entlang der Ausbreitungsrichtung fokussiert ist und dass in der dazu senkrechten Ebene kollimiert ist, also keinen Fokus aufweist. Betrachtet man diese Tatsache auf der Basis der geometrischen Optik, so bedeutet dies, dass in einer Ebene ein Fokus vorliegt, während in der senkrechten Ebene kein Fokus vorhanden ist, was die Figuren 12 bis 15 illustrieren. Natürlich gibt es ein ideal kollimiertes Lichtbündel nur in der geometrischen Optik und nicht in der Realität. Tatsächlich ist die Abweichung zwischen geometrischer Optik und Gaussoptik in Relation zur Größe des Lichtblattes für die vorliegende Betrachtung nicht von Relevanz. Im Sinne dieses Dokuments ist unter einem Lichtblatt insbesondere der Teil einer Lichtverteilung zu verstehen, welcher durch das Beleuchtungslichtbündel auf der Seite der Objektebene des Beleuchtungsobjektivs in einem Abschnitt entlang der Beleuchtungsachse gebildet ist und welcher eine Ausdehnung der Lichtverteilung bzw. des Lichtbündels senkrecht zur optischen Achse des Beleuchtungsobjektivs aufweist, die kleiner als ein vorgebbarer Faktor bezogen auf die dünnste Stelle der Lichtverteilung ist, wobei der vorgebbare Faktor typischerweise Wurzel 2 beträgt. Das Lichtblatt kann im Wesentlichen rechteckförmig - wie dies beispielsweise in Figur 14 angedeutet ist - oder aber bevorzugt trapezförmig ausgebildet sein, wie dies beispielsweise in den Figuren 1, 3, 5, 7 oder 8 angedeutet ist.

Bei einer besonders vorteilhaften Ausführung wird der Abstand der astigmatischen Optik und deren Brennweite so gewählt, dass der Fokus des von der astigmatischen Optik fokussierten Beleuchtungslichtbündels nicht innerhalb des Beleuchtungsobjektivs liegt, da dies bei hohen Intensitäten zur Zerstörung des Beleuchtungsobjektivs führen könnte, insbesondere wenn der Fokus an Grenzflächen innerhalb des Objektivs liegt. Außerdem ist die optische Qualität für eine solche Abbildung sehr schlecht und es können diverse Fehler auftreten, wie z.B. Farbfehler.

Außerdem wird der Abstand der astigmatischen Optik und deren Brennweite vorzugsweise so gewählt, dass der Fokus nicht weit vor dem Beleuchtungsobjektiv liegt, weil sonst das divergente Strahlbündel in das Objektiv eintritt, was zu störenden Reflexen an inneren Aperturen im Beleuchtungsobjektivs und/oder zu Vignettierungseffekten führen kann.

Besonders flexibel einsetzbar ist eine Ausführung, bei der die Brennweite der astigmatischen Optik vom Abstand der astigmatischen Optik zu der Pupille des Beleuchtungsobjektivs verschieden ist.

Bei einer besonders einfach aufgebauten und dennoch sehr flexiblen Ausführung sind keine weiteren fokussierenden oder defokussierenden Elemente zwischen der astigmatischen Optik und dem Beleuchtungsobjektiv angeordnet. Alternativ oder zusätzlich könnte die astigmatische Optik um eine Achse - zumindest um einen vorgebbaren Winkelbereich - verdrehbar angeordnet sein, und zwar insbesondere manuell oder motorisch bewegt. Die Drehachse könnte hierbei die optische Achse des optischen Strahlengangs der Beleuchtungsvorrichtung oder parallel versetzt dazu sein. Hierdurch kann die Ausrichtung des Lichtblatts beeinflusst werden, wobei beispielsweise ein beleuchteter Probenbereich relativ zur Objektebene des Detektionsobjektivs ausgerichtet bzw. überlagert werden kann.

Bei einer ganz besonders kompakten und robusten Ausführung ist die astigmatische Optik Teil des Beleuchtungsobjektivs, was weiter unten in weiteren Details erläutert ist.

In erfindungsgemäßer Weise wurde auch erkannt, dass die Verwendung eines geläufigen Mikroskopobjektivs in Kombination mit einer Zylinderlinse bei den aus dem Stand der Technik bekannten Beleuchtungsanordnungen wegen der üblicherweise verwendeten 4f-Anordnung den Nachteil eines insgesamt relativ langen optischen Wegs hat. Bei diesen Beleuchtungsanordnungen ist die 4f-Anordnung nötig, um die Dimensionen des Lichtblattes an die Größe des Bildfeldes anzupassen, was in den Figuren 12 und 13 dargestellt ist. Dies abgesehen davon, dass bei den dem Stand der Technik bekannten Beleuchtungsanordnungen lediglich in einer Ebene ein Fokus vorliegt, während in der dazu senkrechten Ebene der Fokus im Unendlichen liegt.

Konkret zeigen die Figuren 12 und 13 schematisch einen Aufbau, wie er beispielsweise aus Huisken, J., Swoger, J., Del Bene, F., Wittbrodt, J. & Stelzer, E. H. K., "Optical sectioning deep inside live embryos by selective plane illumination microscopy", Science 305, 1007 (2004), bekannt ist; in Figur 12 in einer Ansicht senkrecht auf die Lichtblattebene und in Figur 13 in einer Ansicht parallel zur Lichtblattebene. Ein solcher Aufbau beinhaltet eine Zylinderlinse 1, eine Relaylinse 2, eine Tubuslinse 3 sowie ein Beleuchtungsobjektiv 4, wobei ein aufgeweitetes, im Querschnitt rundes Lichtbündel 6 über eine 4f-Abbildung durch die Zylinderlinse 1 in eine konjugierte Ebene 5 der Eintrittspupille des Beleuchtungsobjektivs 4 fokussiert wird. Hierbei sind sehr kurze Brennweiten nötig, um große Bildfelder auszuleuchten, also beispielsweise um ein Lichtblatt 11 zu erzeugen, das 1mm breit ist und eine Fokuslänge von 1 mm aufweist. Innerhalb des Lichtblattes 11 liegt vorzugsweise das Sichtfeld 23 der (hier nicht dargestellten) Detektionsoptik.

Dies liegt daran, dass sich die Breite wₓ des Lichtblattes aus dem Durchmesser wo des von der Lichtquelle emittierten Lichtbündels über die Formel wₓ = (f_{obj}/f_{tub})(f_{relay/}f_{cyl})w₀ ableiten lässt. Um eine gute Ausleuchtung w_{BFP} = (f_{tub}/f_{relay}) wo der Eintrittspupille des Beleuchtungsobjektivs zu gewährleisten, muss f_{tub} >> f_{relay} sein. Daraus folgt die Forderung f_{obj} > f_{cyl} um eine ausreichend Breite wₓ des Lichtblatts zu erreichen. Weiterhin kann es Fälle geben, in denen die Breite wₓ sehr viel größer sein soll als die Fokuslänge, beispielsweise wenn das Lichtblatt entlang der Beleuchtungsachse geschoben wird um eine große Probenebene sukzessive abzutasten. Auch in diesem Fall sind kurze Brennweiten der Zylinderlinse nötig.

Analog weist auch die aus W. Krieger, "Mapping Diffusion Properties in Living Cells", Heidelberg, 2014, bekannte Anordnung diese Nachteile auf, wie die Figuren 14 und 15 illustrieren.

Eine weitere Einschränkung der aus dem Stand der Technik bekannten Anordnungen betrifft die Größe und polare Symmetrie der üblicherweise verwendeten Objektive. Diese Symmetrie steht im Gegensatz zu den sehr asymmetrischen Abmessungen des Lichtblatts, das im Querschnitt sehr elliptisch ausgebildet ist. Legt man für eine grobe Abschätzung in paraxialer Näherung die Propagationseigenschaften Gauss'scher Strahlen zu Grunde, erreicht ein Lichtblatt mit einer Breite von 300µm und einer Dicke von 5µm (Fokuslänge ca. 300µm) erst in einer Entfernung von 9.5 mm vom Fokus ein rundes Profil (in größerer Entfernung ist dann das Seitenverhältnis des Strahls umgekehrt gegenüber der Orientierung des Lichtblatts). Dies bedeutet, dass für Objektive mit kürzerem Arbeitsabstand eine runde Ausführung der Frontlinse unvorteilhaft ist, da ein bedeutsamer Teil der Linse nicht genutzt wird. Dieser Aspekt wird insbesondere bedeutsam, wenn das Beleuchtungsobjektiv für eine SPIM-Untersuchung im rechten Winkel zur Detektionsoptik montiert wird. Da das Detektionsobjektiv idealerweise eine hohe numerische Apertur aufweist, kommt es zur "sterischen Hinderung" der beiden Objektive, wenn der Arbeitsabstand des Beleuchtungsobjektivs nicht größer ist als der Radius des Detektionsobjektivs. Die beiden Objektive nehmen dann zusammen einen zu großen Raumwinkel ein, als dass sie in einem Winkel von 90 Grad zueinander so montiert werden können, dass ihre optischen Achsen sich in den Fokusebenen schneiden. Beleuchtungsobjektive mit großem Arbeitsabstand möchte man jedoch gerne vermeiden, da mit dem Arbeitsabstand für eine vorgegebene numerische Apertur naturgemäß der notwendige Durchmesser der Linsen steigt und größere Linsen komplizierter herzustellen, schwerer und teurer sind.

Die besondere Anordnung der astigmatischen Optik in der Nähe der Eintrittspupille des Beleuchtungsobjektivs derart, dass die astigmatische Optik zwischen der Tubuslinse und dem Beleuchtungsobjektiv positioniert ist und/oder keine weiteren fokussierenden oder defokussierenden Elemente zwischen der astigmatischen Optik und dem Beleuchtungsobjektiv vorhanden sind, erlaubt das Erzeugen eines entlang der Ausbreitungsrichtung in der Ebene des Lichtblattes divergenten oder konvergenten Lichtblattes, was letztlich die Dimensionierung des Lichtblattes, also die Anpassung der Breite des Lichtblattes für einen gegebenen Durchmesser des Beleuchtungslichtbündels an der Stelle der astigmatischen Optik erlaubt.

Eine derart angeordnete astigmatische Optik hat Auswirkungen auf bzw. verändert die Brechkraft des Beleuchtungsobjektivs entlang der Achse in der das Lichtblatt erzeugt werden soll näherungsweise gemäß der Formel 1/f_{ges}=1/f₁₊1/f₂-d/(f₁^{∗}f₂), entlang der senkrechten Achse bleibt die Brennweite und optische Abbildungsqualität des Beleuchtungsobjektivs unverändert. Auf diese Weise wird ein Astigmatismus erzeugt, wobei das von dem Beleuchtungsobjektiv fokussierte Beleuchtungslichtbündel einen sagittalen und einen meridionalen Fokus aufweist, die von dem Beleuchtungsobjektiv einen unterschiedlichen Abstand haben. Im Bildfeld ist der Strahlquerschnitt des astigmatischen Beleuchtungslichtbündels daher elliptisch. Die lange Achse des elliptischen Strahlprofils wird bei einer SPIM-Untersuchung einer Probe vorzugsweise derart angeordnet, dass sie in der Fokusebene des Detektionsobjektivs liegt. Entlang der Beleuchtungsachse weist die kürzere Halbachse ein Minimum in der Fokusebene der Beleuchtungsoptik auf, die längere Halbachse ist im Bereich des Bildfeldes monoton ansteigend (positive Brechkraft der astigmatischen Optik bzw. einer Zylinderlinse) oder abnehmend (negative Brechkraft der astigmatischen Optik bzw. einer Zylinderlinse).

Bei einer ganz besonders vorteilhaften Ausführung weist die astigmatische Optik eine negative Brechkraft auf. Insbesondere kann die astigmatische Optik vorteilhaft eine Brechkraft im Bereich von - 1/(500 mm) bis - 1/(700 mm), insbesondere von - 1/(600 mm), aufweisen. Dies insbesondere, wenn das Beleuchtungsobjektiv eine Brennweite im Bereich von 35 mm bis 45 mm, insbesondere von 40 mm aufweist.

Insbesondere kann vorteilhaft vorgesehen sein, dass die astigmatische Optik eine Brechkraft aufweist, die klein in Relation zur Brechkraft des Beleuchtungsobjektivs ist - insbesondere kleiner als 1/10 der Brechkraft des Beleuchtungsobjektivs. Zum einen ist eine solche Ausführung sehr lichteffizient, da keine wesentliche Steigerung der Überleuchtung der Eintrittspupille des Beleuchtungsobjektivs verursacht wird. Darüber hinaus hat sich gezeigt, dass eine solche Ausführung den besonderen Vorteil einer guten optischen Abbildung ohne störende Aberrationen hat.

Die Verwendung einer astigmatischen Optik mit negativer Brechkraft hat in vorteilhafter Weise insbesondere zur Folge, dass die Brechkraft des optischen Systems bestehend aus der astigmatischen Optik und dem Beleuchtungsobjektiv für die Sagittalebene (oder die Meridionalebene) eine reduzierte Brechkraft aufweist, so dass das Beleuchtungslichtbündel, nachdem es das Beleuchtungsobjektiv durchlaufen hat, bezogen auf die Sagittalebene (beziehungsweise die Meridionalebene), weniger divergent verläuft. Dennoch ist es sehr gut möglich, ein derart erzeugtes Lichtblatt relativ zur Probe, beispielsweise unter Verwendung einer (oder mehrerer) hinsichtlich des Ablenkwinkels einstellbaren Strahlablenkeinrichtung zu bewegen, beispielsweise um größere Probenareale sukzessive abzutasten oder im aufeinanderfolgenden Wechsel unterschiedliche interessierende Bereiche (ROI, region of interest) zu beleuchten. Es ist allerdings durchaus auch möglich, dass die astigmatische Optik eine positive Brechkraft aufweist, wobei das oben bezüglich der negativen Brechkraft Gesagte entsprechend für die positive Brechkraft gilt.

Die astigmatische Optik kann insbesondere als Zylinderlinse ausgebildet sein oder wenigstens eine Zylinderlinse aufweisen. Die erfindungsgemäße Beleuchtungsanordnung kann vorteilhaft insbesondere in der Weise ausgebildet sein, dass die astigmatische Optik genau eine einzige Zylinderlinse aufweist. Alternativ ist es auch möglich, dass die astigmatische Optik als Linsengruppe mehrerer unmittelbar hintereinander geschalteter und/oder miteinander in Kontakt stehender Linsen ausgebildet ist, von denen wenigstens eine als Zylinderlinse ausgebildet ist.

Insbesondere kann die astigmatische Optik als Zylinderlinse mit wenigstens einer konkav gewölbten Oberfläche ausgebildet sein oder wenigstens eine solche Zylinderlinse aufweisen. Dies insbesondere, wenn gewünscht ist, dass die astigmatische Optik eine negative Brechkraft aufweist.

Insbesondere in dem Fall, dass die astigmatische Optik eine positive Brechkraft aufweist, kann die astigmatische Optik als Zylinderlinse mit wenigstens einer konvex gewölbten Oberfläche ausgebildet sein oder wenigsten eine solche Zylinderlinse aufweisen.

Insbesondere bei einer Ausführung der Beleuchtungsanordnung, die eine astigmatische Optik mit positiver Brechkraft aufweist, kann vorteilhaft vorgesehen sein, dass das von dem Beleuchtungsobjektiv fokussierte Beleuchtungslichtbündel einen sagittalen und einen meridionalen Fokus aufweist, die von dem Beleuchtungsobjektiv einen unterschiedlichen Axialabstand aufweisen, wobei die Probe im Bereich des Fokus mit dem größeren Axialabstand zu dem Beleuchtungsobjektiv positioniert wird. Hierbei wird vorteilhaft ausgenutzt, dass das Beleuchtungslichtbündel bezogen auf die Ebene, in der das Bildfeld liegt, weniger divergent verläuft. Mit anderen Worten: durch die astigmatische Optik wird die Brechkraft des Beleuchtungsobjektivs in einer Ebene nicht verändert. Es ist günstig dort die Probe zu positionieren, weil dort die Qualität des Beleuchtungslichtbündels besonders hoch ist, während der Fokus in der anderen, zur ersten Ebene senkrechten Ebene näher an das Beleuchtungsobjektiv heranrückt.

Allerdings ist es nicht ausgeschlossen, eine astigmatische Optik mit negativer Brechkraft zu verwenden, wobei hierbei vorzugsweise die Probe im Bereich des Fokus mit dem geringeren Axialabstand zu dem Beleuchtungsobjektiv positioniert wird. Dies deshalb, weil Qualität des Beleuchtungslichtbündels in dem Fokalbereich, der ausschließlich auf das Beleuchtungsobjektiv zurückgeht, höher ist, als in dem Fokalbereich, der durch die astigmatische Optik und das Beleuchtungsobjektiv gemeinsam erzeugt ist.

Wie bereits erwähnt kann die astigmatische Optik vorteilhaft in der Pupillenebene des Beleuchtungsobjektivs oder einer dazu konjugierten Ebene angeordnet sein.

Bei einer ganz besonders vorteilhaften Ausführung ist die astigmatische Optik in einem Unendlichstrahlengang zwischen der Tubuslinse und dem Beleuchtungsobjektiv angeordnet. Eine solche Ausführung hat den ganz besonderen Vorteil, dass bei Standard-Mikroskopstativen und üblichen Mikroskopen an dieser Stelle ohnehin bereits eine Wechselvorrichtung vorhanden ist, um optische Elemente, wie Filter, Strahlteiler oder DIC-Prismen (Differenzinterferenzkontrast-Prismen) einbringen zu können, die genutzt werden kann. Die Wechselvorrichtung kann beispielsweise als Filterrad oder als Filtereinschubvorrichtung oder als Polfiltereinschub oder als Revolver oder als DIC-Revolver ausgebildet sein.

Unabhängig davon, ob die astigmatische Optik unter Verwendung einer Wechselvorrichtung oder auf andere Weise im Beleuchtungsstrahlengang positioniert wird, ist es von Vorteil, wenn eine Vorrichtung zum Bestimmen der Position und Ausrichtung der optischen Achse der astigmatischen Optik vorhanden ist, um die astigmatische Optik, insbesondere mit einer Justiervorrichtung zum Justieren der Position und/oder Ausrichtung der astigmatischen Optik korrekt justieren zu können. Die Vorrichtung zum Bestimmen der Position und die Justiervorrichtung können insbesondere vorteilhaft dazu verwendet werden, die Verkippung des Lichtblatts relativ zu der Fokusebene des Detektionsobjektivs einstellen zu können.

Wie bereits erwähnt, kann die astigmatische Optik, alternativ zu einer Anordnung zwischen der Tubuslinse und dem Beleuchtungsobjektiv, auch Teil des Beleuchtungsobjektivs sein. Dies kann beispielsweise in der Weise realisiert sein, dass die astigmatische Optik als Aufsatz zum Befestigen an dem Beleuchtungsobjektiv, insbesondere an einem Beleuchtungsobjektivgehäuse, ausgebildet ist. Der Aufsatz kann beispielsweise ein Gewinde aufweisen, so dass er auf ein Gegengewinde des Beleuchtungsobjektivgehäuses aufgeschraubt werden kann, wobei die astigmatische Optik vorzugsweise auf der Lichteintrittsseite des Beleuchtungsobjektivs angeordnet ist. Eine solche Ausführung hat den besonderen Vorteil, dass ein Objektiv, das nicht speziell für eine SPIM-Beleuchtung hergestellt wurde, nachträglich umgerüstet werden kann.

Es ist auch möglich, die astigmatische Optik in dem Beleuchtungsobjektiv fest zu montieren, insbesondere ohne dass diese zerstörungsfrei von den übrigen Komponenten des Beleuchtungsobjektivs gelöst werden kann. Insbesondere kann ein solches Beleuchtungsobjektiv speziell ausschließlich als SPIM-Beleuchtungsobjektiv hergestellt sein; dies insbesondere vorteilhaft auch derart, dass es sich von einer im Querschnitt senkrecht zur optischen Achse kreisförmigen Eintrittsapertur zu einer im Querschnitt senkrecht zur optischen Achse elliptischen Frontlinse hin verjüngt, um einen möglichst großen Raum zur Positionierung eines Detektionsobjektivs senkrecht zum Beleuchtungsobjektiv zu lassen.

Bevorzugt ist ein Teil des Beleuchtungsobjektivs - zumindest um einen vorgebbaren Winkelbereich - gegenüber dem Rest des Beleuchtungsobjektivs verdrehbar ausgestaltet, wobei der verdrehbar ausgestaltete Teil des Beleuchtungsobjektivs die elliptische Frontlinse umfasst. Dies könnte mit einer Mechanik realisiert werden, welche ähnlich zu der ausgebildet ist, die bei Korrekturringen von Mikroskopobjektiven zum Einstellen von Dickenvariationen von Deckgläsern vorgesehen ist.

Wie bereits erwähnt, hat die erfindungsgemäße Beleuchtungsanordnung den ganz besonderen Vorteil eines kompakten Aufbaus, was eine SPIM-Untersuchung einer Probe unter Verwendung von Standard-Mikroskopstativen und/oder erfindungsgemäß umgerüsteter Mikroskope erlaubt. Insbesondere ermöglicht es die Erfindung, ein Mikroskop, das die erfindungsgemäße Beleuchtungsanordnung beinhaltet, auf der Basis eines bestehenden Rastermikroskops herzustellen. Insbesondere kann ein solches Rastermikroskops auch als konfokales Rastermikroskop ausgebildet sein. Hierbei kann insbesondere vorgesehen sein, dass ein existierendes Rastermikroskop mit der beschriebenen Beleuchtungsanordnung nachgerüstet wird, um das Rastermikroskop als SPIM-Mikroskop verwenden zu können. Die Erfindung hat hierbei den ganz besonderen Vorteil, dass kein zusätzlicher Bauraum benötigt wird, sondern dass vielmehr der ohnehin bei einem solchen Rastermikroskop vorhandene Bauraum ausreicht, um die oben beschriebene Beleuchtungsanordnung zu implementieren. Dies gilt nicht ausschließlich für Rastermikroskope, sondern insbesondere auch für aufrechte oder inverse Auflichtmikroskope.

Bei der Verwendung eines konventionellen Fluoreszenz-Weitfeldmikroskops als Basis kann die astigmatische Optik vorteilhaft an der Stelle positioniert werden, an der bei dem Fluoreszenz-Weitfeldmikroskop ansonsten der Hauptstrahlteiler angeordnet ist. Der Hauptstrahlteiler ist bei einem Fluoreszenz-Weitfeldmikroskop das Bauteil, das das von einer Lichtquelle kommende Beleuchtungslicht in einen Abschnitt lenkt, wo der Beleuchtungsstrahlengang und der Detektionsstrahlengang koaxial zueinander verlaufen und das von der Probe kommende Detektionslicht zu einer Detektoranordnung passieren lässt.

Wie bereits erwähnt, kann das Beleuchtungsobjektiv nach einem unabhängigen Erfindungsgedanken vorteilhaft in der Weise ausgebildet sein, dass es sich von einer im Querschnitt senkrecht zur optischen Achse kreisförmigen Eintrittsapertur zu einer im Querschnitt senkrecht zur optischen Achse elliptischen Frontlinse hin verjüngt, wobei das Beleuchtungsobjektiv vorzugsweise derart orientiert wird, dass die Hochachse der elliptischen Frontlinse in der Ebene des Lichtblattes angeordnet ist. Die spezielle Form des Beleuchtungsobjektivs erlaubt es, das Beleuchtungsobjektiv in Kombination mit Detektionsoptiken mit hoher Numerischer Apertur selbst dann zu verwenden, wenn das Beleuchtungsobjektiv eine kurzen Arbeitsabstand aufweist; insbesondere einen Arbeitsabstand der kleiner ist als der Radius des Detektionsobjektivs. Ein Objektiv mit kurzem Arbeitsabstand kann vorteilhaft, gemessen an der Größe des Bildfeldes und der Numerischen Apertur, mit vergleichsweise kleinen Linsen gebaut werden.

Ganz allgemein hat ein solches Beleuchtungsobjektiv den ganz besonderen Vorteil, dass es insbesondere zusammen mit hochaperturigen Detektionsobjektiven eingesetzt werden kann, ohne dass es zu einer räumlichen Kollision der Objektive kommt. Vielmehr lässt ein solches Beleuchtungsobjektiv genügend Bauraum zur Anordnung auch hochaperturiger Detektionsobjektive, die einen geringen Arbeitsabstand aufweisen und daher relativ dicht am Lichtblatt angeordnet werden müssen.

Zur Klarstellung sei angemerkt, dass im Sinne dieser Anmeldung unter dem Begriff Objektiv, insbesondere Beleuchtungsobjektiv oder Detektionsobjektiv, insbesondere eine abbildende optische Einheit verstanden wird, die wenigstens drei Linsen beinhaltet und die achromatisch oder apochromatisch oder hinsichtlich eines planen Bildfeldes oder hinsichtlich eines Farbvergrößerungsfehlers korrigiert ist.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein erstes Ausführungsbeispiel einer erfindungsgemäßen Beleuchtungsanordnung in einer Ansicht senkrecht auf die Lichtblattebene,
- Fig. 2: das erste Ausführungsbeispiel in einer Ansicht parallel zur Lichtblattebene,
- Fig. 3: ein zweites Ausführungsbeispiel einer erfindungsgemäßen Beleuchtungsanordnung in einer Ansicht senkrecht auf die Lichtblattebene,
- Fig. 4: das zweite Ausführungsbeispiel in einer Ansicht parallel zur Lichtblattebene,
- Fig. 5: ein drittes Ausführungsbeispiel einer erfindungsgemäßen Beleuchtungsanordnung in einer Ansicht senkrecht auf die Lichtblattebene,
- Fig. 6: das dritte Ausführungsbeispiel in einer Ansicht parallel zur Lichtblattebene,
- Fig. 7: ein viertes Ausführungsbeispiel einer erfindungsgemäßen Beleuchtungsanordnung in einer Ansicht senkrecht auf die Lichtblattebene,
- Fig. 8: ein fünftes Ausführungsbeispiel einer erfindungsgemäßen Beleuchtungsanordnung in einer Ansicht senkrecht auf die Lichtblattebene,
- Fig. 9: ein Ausführungsbeispiel eines erfindungsgemäßen Beleuchtungsobjektivs im Vergleich zu einem herkömmlichen Beleuchtungsobjektiv in einer Seitenansicht,
- Fig. 10: das Ausführungsbeispiel eines erfindungsgemäßen Beleuchtungsobjektivs im Vergleich zu einem herkömmlichen Beleuchtungsobjektiv in einer Frontalansicht in Richtung der optischen Achse des Beleuchtungsobjektivs,
- Fig. 11: das Ausführungsbeispiel eines erfindungsgemäßen Beleuchtungsobjektivs im Vergleich zu einem herkömmlichen Beleuchtungsobjektiv in einer Ansicht senkrecht auf das Bildfeld,
- Fig. 12: eine Ausführung nach dem Stand der Technik in einer Ansicht senkrecht auf die Lichtblattebene,
- Fig. 13: die Ausführung nach dem Stand der Technik in einer Ansicht parallel zur Lichtblattebene,
- Fig. 14: eine andere Ausführung nach dem Stand der Technik in einer Ansicht senkrecht auf die Lichtblattebene, und
- Fig. 15: die andere Ausführung nach dem Stand der Technik in einer Ansicht parallel zur Lichtblattebene.

Figur 1 zeigt ein erstes Ausführungsbeispiel einer erfindungsgemäßen Beleuchtungsanordnung in einer Ansicht senkrecht auf die Lichtblattebene (Lichtblattebene = Zeichenebene). Die Beleuchtungsanordnung weist ein Beleuchtungsobjektiv 4, eine Tubuslinse 3, sowie eine astigmatische Optik 7 auf, die eine Zylinderlinse 1 beinhaltet. Die astigmatische Optik 7 ist zwischen der Tubuslinse 3 und dem Beleuchtungslicht 4 angeordnet, wobei sich keine weiteren fokussierenden oder defokussierenden Elemente zwischen der astigmatischen Optik 7 und dem Beleuchtungsobjektiv 4 befinden und die Position der astigmatischen Optik 7 entlang der optischen Achse beliebig sein kann. Vorzugsweise wird die astigmatischen Optik 7 so nah wie möglich am Objektiv 4 angeordnet. Die Zylinderlinse weist eine konkav gewölbte Oberfläche 12 und eine plane Oberfläche 13 auf.

Die astigmatische Optik 7 weist eine negative Brechkraft auf. Hierbei kann insbesondere vorgesehen sein, dass die negative Brechkraft - 1/(600 mm) beträgt, während die Brennweite des Beleuchtungsobjektivs 4 40 mm beträgt.

Bezogen auf die Lichtblattebene weist das optische System, das aus der astigmatischen Optik 7 und dem Beleuchtungsobjektiv 4 gebildet ist, eine geringere Brechkraft auf als das Beleuchtungsobjektiv 4 alleine, so dass das Beleuchtungslichtbündel 8, nachdem es das Beleuchtungsobjektiv 4 durchlaufen hat bezogen auf die Lichtblattebene (insbesondere zu erkennen Figur 1) weniger divergent verläuft als in der Ebene senkrecht zur Lichtblattebene (insbesondere zu erkennen in Figur 2) dargestellt ist.

Das Beleuchtungslichtbündel 8 ist nach Durchlaufen des Beleuchtungsobjektivs 4 astigmatisch und weist daher in der Ebene senkrecht zur Lichtblattebene einen ersten Fokus 9 und in der Lichtblattebene einen zweiten Fokus 10 auf, die zum Beleuchtungsobjektiv 4 einen unterschiedlichen Axialabstand aufweisen. Vorzugsweise wird bei negativer Brechkraft der Zylinderlinse 1 der erste Fokus 9 als Lichtblatt 11 verwendet, um eine Probe bei einer SPIM-Untersuchung schichtweise zu beleuchten. Innerhalb des Lichtblattes 11 liegt vorzugsweise das Sichtfeld 23 einer (hier nicht dargestellten) Detektionsoptik. Die in Fig. 2 eingezeichneten beiden gestrichelten Linien links und rechts neben der Fokalebene 26 des Beleuchtungsobjektivs 4 deuten den Schärfentiefenbereich des Lichtblatts an.

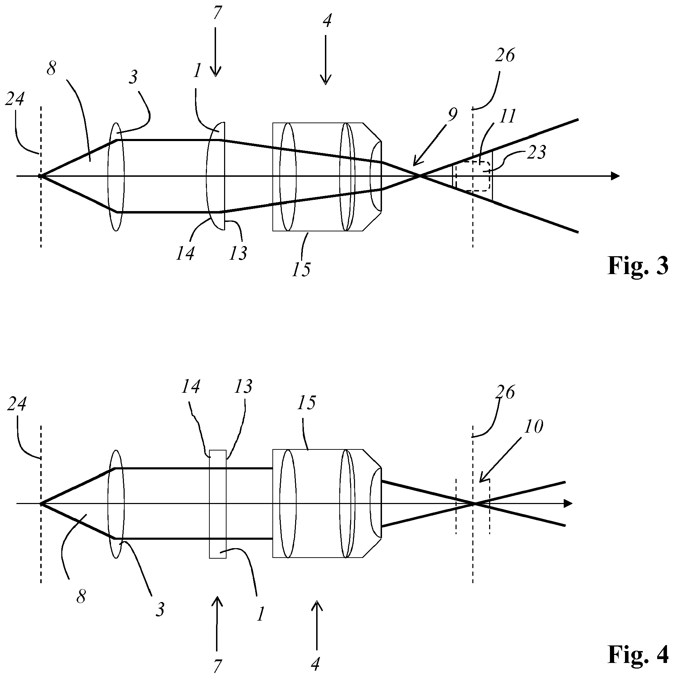

Figur 3 zeigt ein zweites Ausführungsbeispiel einer erfindungsgemäßen Beleuchtungsanordnung für ein Lichtblatt-Mikroskop in einer Ansicht senkrecht auf die Lichtblattebene, während Figur 4 dieses Ausführungsbeispiel in einer Ansicht parallel zur Lichtblattebene zeigt.

Auch bei diesem Ausführungsbeispiel ist eine astigmatische Optik 7 zwischen einer Tubuslinse 3 und einem Beleuchtungsobjektiv 4 angeordnet, wobei sich keine weiteren fokussierenden oder desfokussierenden Elemente zwischen der astigmatischen Optik 7 und dem Beleuchtungsobjektiv 4 befinden. Allerdings unterscheidet sich die in den Figuren 3 und 4 dargestellte Ausführung von der in den Figuren 1 und 2 dargestellten Ausführung dadurch, dass die astigmatische Optik 7 eine positive Brechkraft aufweist. Die astigmatische Optik 7 beinhaltet eine Zylinderlinse 1 mit einer konvex gewölbten Oberfläche 14 und einer planen Oberfläche 13.

Das optische System, das aus der astigmatischen Optik 7 und dem Beleuchtungsobjektiv 4 gebildet ist, weist in Bezug auf die Lichtblattebene (Figur 3) eine größere Brechkraft auf, als das Beleuchtungsobjektiv 4 alleine. Das nach dem Durchlaufen des Beleuchtungsobjektivs 4 astigmatische Beleuchtungslichtbündel 8 weist daher bezogen auf die Lichtblattebene (Figur 3) einen ersten Fokus 9 und bezogen auf die Ebene senkrecht zur Lichtblattebene einen zweiten Fokus 10 auf, wobei der erste Fokus 9 dem Beleuchtungsobjektiv 4 axial näher liegt, als der zweite Fokus 10. Vorzugsweise wird der zweite Fokus 10 als Lichtblatt 11 verwendet, um eine Probe bei einer SPIM-Untersuchung schichtweise zu beleuchten. Hierbei wird vorteilhaft ausgenutzt, dass der zweite Fokus 10 ausschließlich durch die Brechkraft des Beleuchtungsobjektivs 4 erzeugt wurde und daher sämtliche optischen Korrekturen des Beleuchtungsobjektivs 4 voll wirksam sind, während der erste Fokus 9 durch die gemeinsame Wirkung von astigmatischer Optik 7 und Beleuchtungsobjektiv 4 entsteht, so dass für den ersten Fokus 9 die Korrektur von Abbildungsfehlern schlechter ist. Außerdem hat diese Ausführung den besonderen Vorteil, dass durch die Verwendung des zweiten Fokus 10 mehr Raum für ein senkrecht zu dem Beleuchtungsobjektiv 4 anzuordnendes Detektionsobjektiv zur Verfügung gestellt ist. Innerhalb des Lichtblattes 11 liegt vorzugsweise das Sichtfeld 23 einer (hier nicht dargestellten) Detektionsoptik.

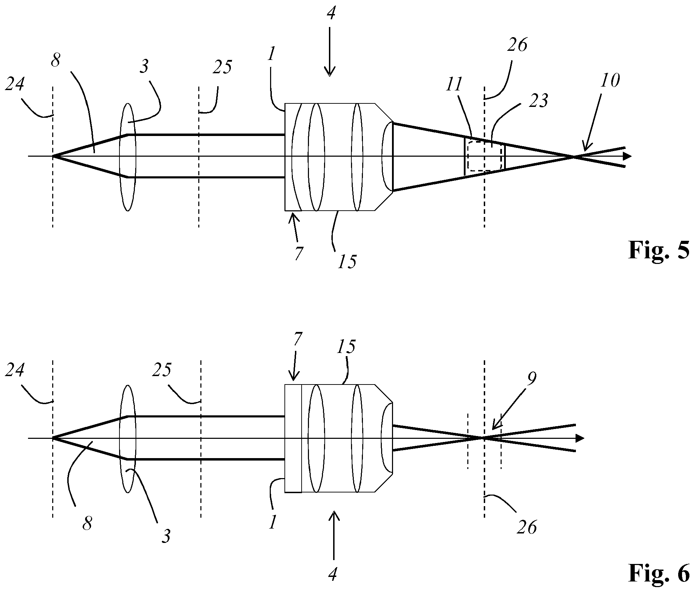

Die Figuren 5 und 6 zeigen ein drittes Ausführungsbeispiel einer erfindungsgemäßen Beleuchtungsanordnung für ein SPIM-Mikroskop, wobei Figur 5 eine Ansicht senkrecht auf die Lichtblattebene (=Zeichenebene) zeigt, während Figur 6 eine Ansicht aus einer Richtung parallel zur Lichtblattebene (die Lichtblattebene steht senkrecht zur Zeichenebene) darstellt.

Die Beleuchtungsanordnung beinhaltet ein Beleuchtungsobjektiv 4 und eine Tubuslinse 3, sowie eine astigmatische Optik 7, die bei diesem Ausführungsbeispiel als Zylinderlinse 1 mit negativer ist. Dies kann beispielsweise dadurch realisiert sein, dass die astigmatische Optik 7 als schraubbarer Aufsatz zum Befestigen an dem Beleuchtungsobjektiv 4, insbesondere an einem Beleuchtungsobjektivgehäuse 15 des Beleuchtungsobjektivs 4, ausgebildet ist. Die astigmatische Optik 7 kann jedoch auch in das Beleuchtungsobjektivgehäuse bzw. fest an einer vorgebbaren Stelle des Beleuchtungsobjektivgehäuses 15 oder an einer beliebigen Position innerhalb des Beleuchtungsobjektivgehäuses 15 moniert sein.

Das Beleuchtungslichtbündel 8 wird bei diesem Ausführungsbeispiel im Wesentlichen ähnlich fokussiert, wie bei dem Ausführungsbeispiel, das in den Figuren 1 und 2 gezeigt ist. Innerhalb des Lichtblattes 11 liegt vorzugsweise das Sichtfeld 23 einer (hier nicht dargestellten) Detektionsoptik.

Das Beleuchtungslichtbündel 8 weist in einer konjugierte Ebene 24 zur Fokalebene 26 des Beleuchtungsobjektivs 4 einen Fokus auf und wird anschließend von einer Tubuslinse 3 kollimiert, so dass es als kollimiertes Beleuchtungslichtbündel die Pupillenebene des Beleuchtungsobjektivs 4 durchläuft.

In Bezug auf die Ebene, die in Fig. 5 gezeigt ist, ändert die astigmatische Optik 7 die Brechkraft des Beleuchtungsobjektivs 4 nicht. Der zweite Fokus 10 befindet sich daher in der Fokalebene 26 des Beleuchtungsobjektivs 4. In Bezug auf die Ebene, die in Fig. 6 gezeigt ist wirkt die negative Brechkraft der astigmatischen Optik 7 zusätzlich zur die Brechkraft des Beleuchtungsobjektivs 4, so dass die insgesamt geringere Brechkraft bewirkt, dass der zweite Fokus 10 weiter vom Beleuchtungsobjektiv 4 entfernt liegt, als der erste Fokus 9. Hierbei wird vorteilhaft ausgenutzt, dass der erste Fokus 9 ausschließlich durch die Brechkraft des Beleuchtungsobjektivs 4 erzeugt wurde und daher sämtliche optischen Korrekturen des Beleuchtungsobjektivs voll wirksam sind, während der zweite Fokus 10 durch die gemeinsame Wirkung von astigmatischer Optik 7 und Beleuchtungsobjektiv 4 entsteht, so dass für den zweiten Fokus 10 die Korrektur von Abbildungsfehlern schlechter ist.

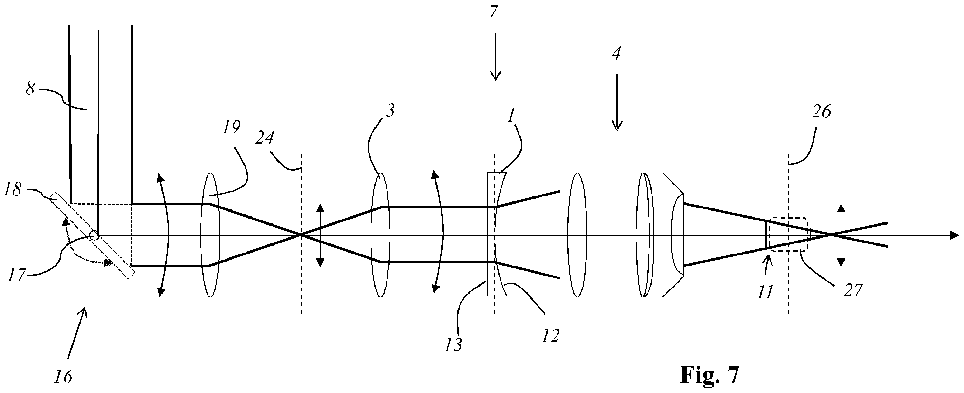

Fig. 7 zeigt ein viertes Ausführungsbeispiel einer erfindungsgemäßen Beleuchtungsanordnung in einer Ansicht senkrecht auf die Lichtblattebene (Lichtblattebene= Zeichenebene), das eine (nur sehr schematisch dargestellte) hinsichtlich des Ablenkwinkels einstellbare Strahlablenkeinrichtung 16, nämlich einen um eine Drehachse 17 drehbaren Spiegel 18 aufweist. Die Drehachse 17 ist senkrecht zur Lichtblattebene ausgerichtet.

Dem Spiegel 18 ist eine Scanlinse 19 nachgeschaltet. Außerdem weist die Beleuchtungsanordnung ein Beleuchtungsobjektiv 4, eine Tubuslinse 3, sowie eine astigmatische Optik 7 auf, die eine Zylinderlinse 1 beinhaltet. Die astigmatische Optik 7 ist zwischen der Tubuslinse 3 und dem Beleuchtungsobjektiv 4 angeordnet, wobei sich keine weiteren fokussierenden oder defokussierenden Elemente zwischen der astigmatischen Optik 7 und dem Beleuchtungsobjektiv 4 befinden. Die Zylinderlinse weist eine konkav gewölbte Oberfläche 12 und eine plane Oberfläche 13 auf. Das Beleuchtungslichtbündel 8 wird bei diesem Ausführungsbeispiel vom Beleuchtungsobjektiv 4 im Wesentlichen ähnlich fokussiert, wie bei dem Ausführungsbeispiel, das in den Figuren 1 und 2 gezeigt ist.

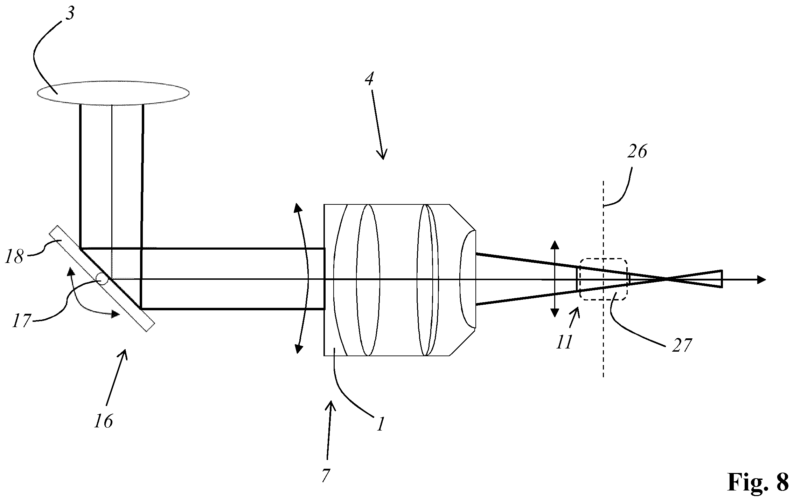

Durch Drehen des Spiegels 18 um die Drehachse 17 kann der von der Scanlinse 19 erzeugte Fokus in der zur Fokalebene 26 des Beleuchtungsobjektivs 4 konjugierten Ebene 24 quer zur optischen Achse bewegt werden (siehe Doppelpfeil), wodurch das Lichtblatt senkrecht zur optischen Achse des Beleuchtungsobjektivs 4 verschoben werden kann, beispielsweise um einen Probenbereich 27 über die Breite des Bildfeldes sukzessive mit dem Lichtblatt 11 zu beleuchten. Hierdurch kann zeitsequentiell ein - ggf. sogar noch größer als in Fig. 7 bzw. 8 eingezeichneter - Probenbereich 27 scannend beleuchtet werden. Es ist auch möglich, das Lichtblatt in Lichtausbreitungsrichtung zu verschieben, wenn eine Probenschicht in zwei Dimensionen sukzessive mit dem Lichtblatt 11 beleuchtet werden soll.

Fig. 8 zeigt ein fünftes Ausführungsbeispiel einer erfindungsgemäßen Beleuchtungsanordnung in einer Ansicht senkrecht auf die Lichtblattebene (Lichtblattebene = Zeichenebene). Die Beleuchtungsanordnung beinhaltet ein Beleuchtungsobjektiv 4 und eine Tubuslinse 3, sowie eine astigmatische Optik 7, die als Zylinderlinse 1 mit negativer Brechkraft Teil des Beleuchtungsobjektivs 4 ist.

Die Beleuchtungsanordnung beinhaltet außerdem zwischen der Tubuslinse 3 und dem Beleuchtungsobjektiv 4 eine schematisch angedeutete, hinsichtlich des Ablenkwinkels einstellbare Strahlablenkeinrichtung 16, die es erlaubt, das Lichtblatt 11, das einen Probenbereich 27 beleuchtet, senkrecht zur optischen Achse des Beleuchtungsobjektivs 4 zu verschieben.

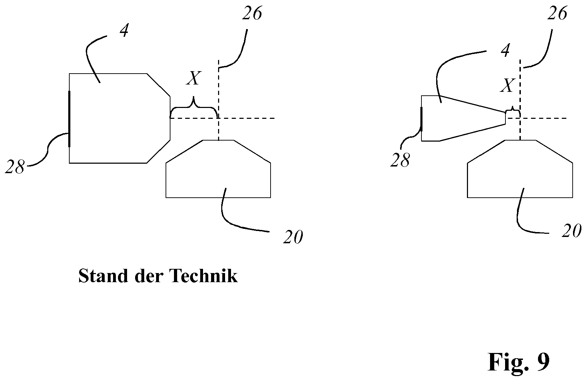

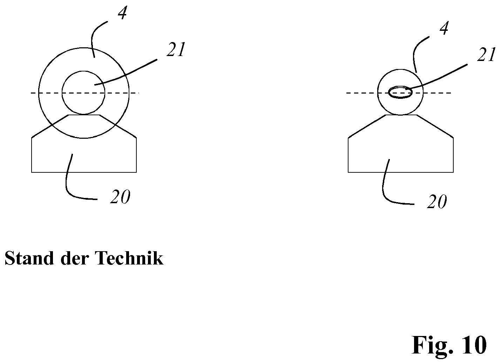

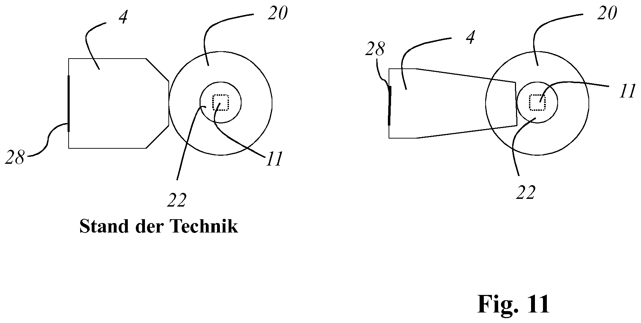

Die Fig. 9 bis 11 zeigen ein Ausführungsbeispiel eines erfindungsgemäßen Beleuchtungsobjektivs 4 und dessen Anordnung relativ zu einem Detektionsobjektiv 20 im Vergleich einer Anordnung mit herkömmlichem Beleuchtungsobjektiv 4, wobei in der jeweils linken Abbildung die Anordnung nach dem Stand der Technik und in der jeweils rechten Abbildung die Anordnung mit dem erfindungsgemäßen Beleuchtungsobjektiv 4 gezeigt ist. Der freie Arbeitsabstand X, also der Abstand zwischen Fokusebene 26 und Frontlinse des Beleuchtungsobjektivs 4 kann erfindungsgemäß deutlich gegenüber dem freien Arbeitsabstand der aus dem Stand der Technik bekannten Anordnungen reduziert werden.

Das erfindungsgemäßen Beleuchtungsobjektivs 4 verjüngt sich von einer im Querschnitt senkrecht zur optischen Achse kreisförmigen Eintrittsapertur 28 zu einer im Querschnitt senkrecht zur optischen Achse elliptischen Frontlinse 21 hin, wobei das Beleuchtungsobjektiv 4 vorzugsweise derart orientiert wird, dass die Hochachse der elliptischen Frontlinse 21 in der Ebene des Lichtblattes 11 angeordnet ist. Die spezielle Form des Beleuchtungsobjektivs 4 erlaubt es, das Beleuchtungsobjektiv 4 in Kombination mit einem Detektionsobjektiv 20, das eine Frontlinse 22 aufweist, mit hoher Numerischer Apertur selbst dann zu verwenden, wenn das Beleuchtungsobjektiv 4 eine kurzen Arbeitsabstand aufweist; insbesondere einen Arbeitsabstand der kleiner ist als der Radius des Detektionsobjektivs 21, insbesondere einen Arbeitsabstand der nur etwas größer ist, als das Bildfeld des Detektionsobjektivs 21.

### Bezugszeichenliste:

- 1: Zylinderlinse
- 2: Relaylinse
- 3: Tubuslinse
- 4: Beleuchtungsobjektiv
- 5: zur Pupille des Beleuchtungsobjektivs konjugierte Ebene
- 6: Lichtbündel
- 7: astigmatische Optik
- 8: Beleuchtungslichtbündel
- 9: erster Fokus
- 10: zweiter Fokus
- 11: Lichtblatt
- 12: Konkav gewölbte Oberfläche
- 13: plane Oberfläche
- 14: konvex gewölbten Oberfläche
- 15: Beleuchtungsobjektivgehäuse
- 16: Strahlablenkeinrichtung
- 17: Drehachse
- 18: Spiegel
- 19: Scanlinse
- 20: Detektionsobjektiv
- 21: elliptische Frontlinse von (4)
- 22: Frontlinse des Detektionsobjektivs
- 23: Sichtfeld Detektionsoptik
- 24: konjugierte Ebene zu (26) von (4)
- 25: Pupillenebene von (4)
- 26: Fokalebene von (4)
- 27: Probenbereich
- 28: Eintrittsapertur von (4)
- X: freier Arbeitsabstand von (4)

## Patentansprüche

1. Lichtblatt-Mikroskop mit einer Beleuchtungseinrichtung zum Beleuchten einer Probe mit einem Beleuchtungslichtbündel (8), das im Bereich der Probe als Lichtblatt (11) ausgebildet ist, wobei die Beleuchtungseinrichtung ein Beleuchtungsobjektiv (4), eine Tubuslinse (3) und eine astigmatischen Optik (7) aufweist, **dadurch gekennzeichnet, dass** die astigmatische Optik (7) derart ausgebildet und derart zwischen der Tubuslinse (3) und dem Beleuchtungsobjektiv (4) angeordnet ist,
dass die Brennweite der astigmatischen Optik (7) vom Abstand der astigmatischen Optik zu der Pupille des Beleuchtungsobjektivs (4) verschieden ist,
dass das aus dem Beleuchtungsobjektiv (4) austretende Beleuchtungslichtbündel (8) einen sagittalen Fokus (9) und einen meridionalen Fokus (10) aufweist, die von vom Beleuchtungsobjektiv (4) einen unterschiedlichen Axialabstand aufweisen; und
dass das Lichtblatt als ein entlang der Ausbreitungsrichtung des Beleuchtungslichtbündels (8) in der Ebene des Lichtblatts divergentes oder konvergentes Lichtblatt erzeugt wird.

2. Lichtblatt-Mikroskop nach Anspruch 1, **dadurch gekennzeichnet, dass** keine weiteren fokussierenden oder defokussierenden Elemente zwischen der astigmatischen Optik (7) und dem Beleuchtungsobjektiv (4) angeordnet sind.

3. Lichtblatt-Mikroskop nach Anspruch 1 oder 2, **dadurch gekennzeichnet, dass** die astigmatische Optik (7) - zumindest um einen vorgebbaren Winkelbereich - um eine Achse verdrehbar angeordnet ist.

4. Lichtblatt-Mikroskop nach einem der Ansprüche 1 bis 3, **dadurch gekennzeichnet, dass** die astigmatische Optik (7) Teil des Beleuchtungsobjektivs (4) ist.

5. Lichtblatt-Mikroskop nach einem der Ansprüche 1 bis 4, **dadurch gekennzeichnet, dass** die astigmatische Optik (7) eine negative Brechkraft aufweist.

6. Lichtblatt-Mikroskop nach einem der Ansprüche 1 bis 4, **dadurch gekennzeichnet, dass** die astigmatische Optik (7) eine positive Brechkraft aufweist.

7. Lichtblatt-Mikroskop nach einem der Ansprüche 1 bis 6, **dadurch gekennzeichnet, dass** die astigmatische Optik (7) als Zylinderlinse (1) ausgebildet ist oder eine Zylinderlinse (1) aufweist,

8. Lichtblatt-Mikroskop nach einem der Ansprüche 1 bis 7, **dadurch gekennzeichnet, dass** die astigmatische Optik (7) in der Pupille (5) des Beleuchtungsobjektivs (4) angeordnet ist.

9. Lichtblatt-Mikroskop nach einem der Ansprüche 1 bis 8, **dadurch gekennzeichnet, dass** die astigmatische Optik (7) in einem Unendlichstrahlengang zwischen der Tubuslinse (3) und dem Beleuchtungsobjektiv (4) angeordnet ist.

10. Lichtblatt-Mikroskop nach einem der Ansprüche 1 bis 9, **dadurch gekennzeichnet, dass** sich das Beleuchtungsobjektiv (4) von einer im Querschnitt senkrecht zur optischen Achse kreisförmigen Eintrittsapertur zu einer im Querschnitt senkrecht zur optischen Achse elliptischen Frontlinse (21) hin verjüngt.

11. Lichtblatt-Mikroskop nach Anspruch 10, **dadurch gekennzeichnet, dass** die Hochachse der Frontlinse (21) in der Ebene des Lichtblattes angeordnet ist.

12. Lichtblatt-Mikroskop nach Anspruch 10 oder 11, **dadurch gekennzeichnet, dass** ein Teil des Beleuchtungsobjektivs (4) - zumindest um einen vorgebbaren Winkelbereich - gegenüber dem Rest des Beleuchtungsobjektivs (4) verdrehbar ausgestaltet ist, wobei der verdrehbar ausgestaltete Teil des Beleuchtungsobjektivs (4) die elliptischen Frontlinse (21) umfasst.

13. Lichtblatt-Mikroskop nach einem der Ansprüche 1 bis 12, **gekennzeichnet durch** eine Justiervorrichtung zum Justieren der Position und/oder der Ausrichtung der astigmatischen Optik (7).

14. Lichtblatt-Mikroskop nach einem der Ansprüche 1 bis 13, **gekennzeichnet durch** eine Vorrichtung zum Bestimmen der Position und Ausrichtung optischen Achse der astigmatischen Optik (7).

15. Lichtblatt-Mikroskop nach einem der Ansprüche 1 bis 14, **gekennzeichnet durch**
a. eine Fokusschiebevorrichtung zum Verändern der Position des Lichtblattes (11) entlang der Lichtausbreitungsrichtung, und/oder durch
b. eine Fokusschiebevorrichtung zum Verändern der Position des Lichtblattes (11) senkrecht zur optischen Achse des Beleuchtungsobjektivs (4).

16. Lichtblatt-Mikroskop nach einem der Ansprüche 1 bis 15, **dadurch gekennzeichnet, dass** die astigmatische Optik (7) als Aufsatz zum Befestigen an dem Beleuchtungsobjektiv (4) oder einem Beleuchtungsobjektivgehäuse (15) ausgebildet ist.

17. Lichtblatt-Mikroskop nach einem der Ansprüche1 bis 15, **dadurch gekennzeichnet, dass** die astigmatische Optik (7) mittels einer Wechselvorrichtung zum Einbringen von optischen Bauteilen in den Strahlengang des Beleuchtungslichtbündels (8) wahlweise in den Strahlengang des Beleuchtungslichtbündels (8) eingefügt oder aus dem Strahlengang des Beleuchtungslichtbündels entfernt werden kann.

18. Lichtblatt-Mikroskop nach Anspruch 17, **dadurch gekennzeichnet, dass** die Wechselvorrichtung als Filterrad oder als Filtereinschubvorrichtung oder als Polfiltereinschub oder als Revolver oder als DIC-Revolver ausgebildet ist.

19. Lichtblatt-Mikroskop nach einem der Ansprüche 1 bis 18, **dadurch gekennzeichnet, dass** das Mikroskop als Rastermikroskop, insbesondere als konfokales Rastermikroskop ausgebildet ist, oder dass das Mikroskop aus einem Rastermikroskop, insbesondere einem konfokalen Rastermikroskop, hergestellt ist.

20. Lichtblatt-Mikroskop nach Anspruch 19, **dadurch gekennzeichnet, dass** die astigmatische Optik (7) an der Stelle positioniert ist oder positionierbar ist, an der bei dem Rastermikroskop ansonsten der Hauptstrahlteiler angeordnet ist.

21. Verfahren zum Beleuchten einer mikroskopischen Probe unter Verwendung eines Lichtblatt-Mikroskops mit einer Beleuchtungseinrichtung zum Beleuchten der Probe mit einem Beleuchtungslichtbündel (8), das im Bereich der Probe als Lichtblatt ausgebildet ist, wobei die Beleuchtungseinrichtung ein Beleuchtungsobjektiv (4), eine Tubuslinse (3) und eine astigmatische Optik (7) aufweist, **dadurch gekennzeichnet, dass** die astigmatische Optik (7) zwischen der Tubuslinse (3) und dem Beleuchtungsobjektiv (4) derart angeordnet wird,
dass die Brennweite der astigmatischen Optik (7) vom Abstand der astigmatischen Optik zu der Pupille des Beleuchtungsobjektivs (4) verschieden ist,
dass das aus dem Beleuchtungsobjektiv (4) austretende Beleuchtungslichtbündel (8) einen sagittalen Fokus (9) und einen meridionalen Fokus (10) aufweist, die von dem Beleuchtungsobjektiv (4) einen unterschiedlichen Axialabstand aufweisen, und
dass das Lichtblatt als ein entlang der Ausbreitungsrichtung des Beleuchtungslichtbündels (8) in der Ebene des Lichtblatts divergentes oder konvergentes Lichtblatt erzeugt wird.

22. Verfahren nach Anspruch 21, **dadurch gekennzeichnet, dass**
a. die Probe im Bereich des Fokus mit dem geringeren Axialabstand zu dem Beleuchtungsobjektiv (4) positioniert wird, wenn die astigmatische Optik eine negative Brechkraft aufweist oder dass
b. die Probe im Bereich des Fokus mit dem größeren Axialabstand zu dem Beleuchtungsobjektiv (4) positioniert wird, wenn die astigmatische Optik eine positive Brechkraft aufweist.

## Claims

1. Light sheet microscope having an illumination apparatus for illuminating a sample with an illumination beam (8) which is formed in the region of the sample as a light sheet (11), wherein the illumination apparatus comprises an illumination objective (4), a tube lens (3) and an astigmatic optical unit (7), **characterized in that** the astigmatic optical unit (7) is formed in such a way and is arranged between the tube lens (3) and the illumination objective (4) in such a way
that the focal length of the astigmatic optical unit (7) is different from the distance of the astigmatic optical unit to the pupil of the illumination objective (4),
that the illumination beam (8) exiting from the illumination objective (4) has a sagittal focus (9) and a meridional focus (10), which have a different axial distance from the illumination objective (4); and
that the light sheet is generated as a light sheet which diverges or converges along the propagation direction of the illumination beam (8) in the plane of the light sheet.

2. Light sheet microscope according to Claim 1, **characterized in that** no further focusing or defocusing elements are arranged between the astigmatic optical unit (7) and the illumination objective (4).

3. Light sheet microscope according to Claim 1 or 2, **characterized in that** the astigmatic optical unit (7) is arranged to be rotatable - at least through a specifiable angular range - about an axis.

4. Light sheet microscope according to any of Claims 1 to 3, **characterized in that** the astigmatic optical unit (7) is part of the illumination objective (4).

5. Light sheet microscope according to any of Claims 1 to 4, **characterized in that** the astigmatic optical unit (7) has a negative refractive power.

6. Light sheet microscope according to any of Claims 1 to 4, **characterized in that** the astigmatic optical unit (7) has a positive refractive power.

7. Light sheet microscope according to any of Claims 1 to 6, **characterized in that** the astigmatic optical unit (7) is formed as a cylindrical lens (1) or has a cylindrical lens (1).

8. Light sheet microscope according to any of Claims 1 to 7, **characterized in that** the astigmatic optical unit (7) is arranged in the pupil (5) of the illumination objective (4).

9. Light sheet microscope according to any of Claims 1 to 8, **characterized in that** the astigmatic optical unit (7) is arranged in an infinite beam path between the tube lens (3) and the illumination objective (4).

10. Light sheet microscope according to any of Claims 1 to 9, **characterized in that** the illumination objective (4) tapers from an input aperture which is circular in the cross section perpendicular to the optical axis to a front lens (21) which is elliptical in the cross section perpendicular to the optical axis.

11. Light sheet microscope according to Claim 10, **characterized in that** the vertical axis of the front lens (21) is arranged in the plane of the light sheet.

12. Light sheet microscope according to Claim 10 or 11, **characterized in that** a part of the illumination objective (4) is embodied to be rotatable - at least through a specifiable angular range - in relation to the rest of the illumination objective (4), wherein the rotatably embodied part of the illumination objective (4) comprises the elliptical front lens (21).

13. Light sheet microscope according to any of Claims 1 to 12, **characterized by** an adjusting device for adjusting the position and/or the orientation of the astigmatic optical unit (7).

14. Light sheet microscope according to any of Claims 1 to 13, **characterized by** a device for ascertaining the position and orientation of the optical axis of the astigmatic optical unit (7).

15. Light sheet microscope according to any of Claims 1 to 14, **characterized by**
a. a focus displacement device for changing the position of the light sheet (11) along the light propagation direction, and/or by
b. a focus displacement device for changing the position of the light sheet (11) perpendicular to the optical axis of the illumination objective (4).

16. Light sheet microscope according to any of Claims 1 to 15, **characterized in that** the astigmatic optical unit (7) is formed as an attachment for fixing to the illumination objective (4) or an illumination objective housing (15).

17. Light sheet microscope according to any of Claims 1 to 15, **characterized in that** the astigmatic optical unit (7) can be selectively inserted into the beam path of the illumination beam (8) or removed from the beam path of the illumination beam, using a changing device for introducing optical components into the beam path of the illumination beam (8).

18. Light sheet microscope according to Claim 17, **characterized in that** the changing device is formed as a filter wheel or as a filter insertion device or as a polarizing filter insertion or as a turret or as a DIC turret.

19. Light sheet microscope according to any of Claims 1 to 18, **characterized in that** the microscope is formed as a scanning microscope, particularly as a confocal scanning microscope, or that the microscope is produced from a scanning microscope, particularly a confocal scanning microscope.

20. Light sheet microscope according to Claim 19, **characterized in that** the astigmatic optical unit (7) is positioned or is positionable at the position at which the main beam splitter is otherwise arranged in the scanning microscope.

21. Method for illuminating a microscopic sample using a light sheet microscope having an illumination apparatus for illuminating the sample with an illumination beam (8) which is formed in the region of the sample as a light sheet, wherein the illumination apparatus comprises an illumination objective (4), a tube lens (3) and an astigmatic optical unit (7), **characterized in that** the astigmatic optical unit (7) is arranged between the tube lens (3) and the illumination objective (4) in such a way that the focal length of the astigmatic optical unit (7) is different from the distance of the astigmatic optical unit to the pupil of the illumination objective (4),
that the illumination beam (8) exiting from the illumination objective (4) has a sagittal focus (9) and a meridional focus (10), which have a different axial distance from the illumination objective (4), and
that the light sheet is generated as a light sheet which diverges or converges along the propagation direction of the illumination beam (8) in the plane of the light sheet.

22. Method according to Claim 21, **characterized in that**
a. the sample is positioned in the region of the focus with the smaller axial distance to the illumination objective (4) if the astigmatic optical unit has a negative refractive power or **in that**
b. the sample is positioned in the region of the focus with the larger axial distance to the illumination objective (4) if the astigmatic optical unit has a positive refractive power.

## Revendications

1. Microscope à feuille de lumière, comprenant un dispositif d'éclairage pour éclairer un échantillon par un faisceau lumineux d'éclairage (8) réalisé sous forme de feuille de lumière (11) au niveau de l'échantillon, dans lequel le dispositif d'éclairage présente un objectif d'éclairage (4), une lentille tubulaire (3) et une optique astigmatique (7), **caractérisé en ce que** l'optique astigmatique (7) est réalisée de telle sorte et disposée entre la lentille tubulaire (3) et l'objectif d'éclairage (4) de telle sorte
**que** la distance focale de l'optique astigmatique (7) est différente de la distance de l'optique astigmatique par rapport à la pupille de l'objectif d'éclairage (4),
**que** le faisceau lumineux d'éclairage (8) émergeant de l'objectif d'éclairage (4) présente un foyer sagittal (9) et un foyer méridional (10) ayant une distance axiale différente par rapport à l'objectif d'éclairage (4) ; et
**que** la feuille de lumière est produite comme une feuille de lumière divergente ou convergente le long de la direction de propagation du faisceau lumineux d'éclairage (8) dans le plan de la feuille de lumière.

2. Microscope à feuille de lumière selon la revendication 1, **caractérisé en ce qu'**aucun élément de focalisation ou de défocalisation supplémentaire n'est disposé entre l'optique astigmatique (7) et l'objectif d'éclairage (4).

3. Microscope à feuille de lumière selon la revendication 1 ou 2, **caractérisé en ce que** l'optique astigmatique (7) est disposée pivotante autour d'un axe, au moins sur une plage angulaire prédéfinissable.

4. Microscope à feuille de lumière selon l'une quelconque des revendications 1 à 3, **caractérisé en ce que** l'optique astigmatique (7) fait partie de l'objectif d'éclairage (4).

5. Microscope à feuille de lumière selon l'une quelconque des revendications 1 à 4, **caractérisé en ce que** l'optique astigmatique (7) présente une puissance de réfraction négative.

6. Microscope à feuille de lumière selon l'une quelconque des revendications 1 à 4, **caractérisé en ce que** l'optique astigmatique (7) présente une puissance de réfraction positive.

7. Microscope à feuille de lumière selon l'une quelconque des revendications 1 à 6, **caractérisé en ce que** l'optique astigmatique (7) est réalisée sous forme de lentille cylindrique (1) ou comporte une lentille cylindrique (1).

8. Microscope à feuille de lumière selon l'une quelconque des revendications 1 à 7, **caractérisé en ce que** l'optique astigmatique (7) est disposée dans la pupille (5) de l'objectif d'éclairage (4).

9. Microscope à feuille de lumière selon l'une quelconque des revendications 1 à 8, **caractérisé en ce que** l'optique astigmatique (7) est disposée sur une trajectoire de faisceau à l'infini entre la lentille tubulaire (3) et l'objectif d'éclairage (4).

10. Microscope à feuille de lumière selon l'une quelconque des revendications 1 à 9, **caractérisé en ce que** l'objectif d'éclairage (4) s'amincit depuis une ouverture d'entrée à section transversale circulaire perpendiculairement à l'axe optique jusqu'à une lentille frontale (21) à section transversale elliptique perpendiculairement à l'axe optique.

11. Microscope à feuille de lumière selon la revendication 10, **caractérisé en ce que** l'axe normal de la lentille frontale (21) est disposé dans le plan de la feuille de lumière.

12. Microscope à feuille de lumière selon la revendication 10 ou 11, **caractérisé en ce qu'**une partie de l'objectif d'éclairage (4) est configurée pivotante par rapport au reste de l'objectif d'éclairage (4), au moins sur une plage angulaire prédéfinissable, la partie configurée pivotante de l'objectif d'éclairage (4) comprenant la lentille frontale elliptique (21).

13. Microscope à feuille de lumière selon l'une quelconque des revendications 1 à 12, **caractérisé par** un dispositif d'ajustement destiné à ajuster la position et/ou l'orientation de l'optique astigmatique (7) .

14. Microscope à feuille de lumière selon l'une quelconque des revendications 1 à 13, **caractérisé par** un dispositif destiné à déterminer la position et l'orientation de l'axe optique de l'optique astigmatique (7).

15. Microscope à feuille de lumière selon l'une quelconque des revendications 1 à 14, **caractérisé par** a. un dispositif de décalage de foyer destiné à modifier la position de la lame de lumière (11) le long de la direction de propagation de lumière, et/ou par b. un dispositif de décalage de foyer destiné à modifier la position de la lame de lumière (11) perpendiculairement à l'axe optique de l'objectif d'éclairage (4).

16. Microscope à feuille de lumière selon l'une quelconque des revendications 1 à 15, **caractérisé en ce que** l'optique astigmatique (7) est réalisée sous forme d'embout à fixer sur l'objectif d'éclairage (4) ou sur un boîtier d'objectif d'éclairage (15).

17. Microscope à feuille de lumière selon l'une quelconque des revendications 1 à 15, **caractérisé en ce qu'**un dispositif de changement destiné à introduire des composants optiques sur la trajectoire du faisceau lumineux d'éclairage (8) permet au choix d'insérer l'optique astigmatique (7) sur la trajectoire du faisceau lumineux d'éclairage (8) ou de l'écarter de la trajectoire du faisceau lumineux d'éclairage.

18. Microscope à feuille de lumière selon la revendication 17, **caractérisé en ce que** le dispositif de changement est réalisé sous forme de roue à filtre ou de dispositif d'insertion de filtre ou d'insert de filtre polarisant ou de révolver ou de révolver DIC.

19. Microscope à feuille de lumière selon l'une quelconque des revendications 1 à 18, **caractérisé en ce que** le microscope est réalisé sous forme de microscope à balayage, en particulier de microscope à balayage confocal, ou **en ce que** le microscope est fabriqué à partir d'un microscope à balayage, en particulier d'un microscope à balayage confocal.

20. Microscope à feuille de lumière selon la revendication 19, **caractérisé en ce que** l'optique astigmatique (7) est positionnée ou positionnable à l'endroit où se trouve normalement le séparateur de faisceaux principal sur le microscope à balayage.

21. Procédé d'éclairage d'un échantillon microscopique en utilisant un microscope à feuille de lumière avec un dispositif d'éclairage destiné à éclairer l'échantillon par un faisceau lumineux d'éclairage (8) réalisé sous forme de feuille de lumière au niveau de l'échantillon, dans lequel le dispositif d'éclairage présente un objectif d'éclairage (4), une lentille tubulaire (3) et une optique astigmatique (7), **caractérisé en ce que** l'optique astigmatique (7) est disposée entre la lentille tubulaire (3) et l'objectif d'éclairage (4) de telle sorte
**que** la distance focale de l'optique astigmatique (7) est différente de la distance de l'optique astigmatique par rapport à la pupille de l'objectif d'éclairage (4),
**que** le faisceau lumineux d'éclairage (8) émergeant de l'objectif d'éclairage (4) présente un foyer sagittal (9) et un foyer méridional (10) ayant une distance axiale différente par rapport à l'objectif d'éclairage (4), et
**que** la feuille de lumière est produite comme une feuille de lumière divergente ou convergente dans le plan de la feuille de lumière le long de la direction de propagation du faisceau lumineux d'éclairage (8).

22. Procédé selon la revendication 21, **caractérisé en ce que**
a. l'échantillon est positionné au niveau du foyer avec une distance axiale inférieure par rapport à l'objectif d'éclairage (4) quand l'optique astigmatique présente une puissance de réfraction négative, ou **en ce que**
b. l'échantillon est positionné au niveau du foyer avec une distance axiale supérieure par rapport à l'objectif d'éclairage (4) quand l'optique astigmatique présente une puissance de réfraction positive.
